# EUROPÄISCHE PATENTSCHRIFT

(11) **EP 0 385 280 B1**
(45) Veröffentlichungstag und Bekanntmachung des Hinweises auf die Patenterteilung: **11.01.1995**
(21) Anmeldenummer: 90103485.0
(22) Anmeldetag: 23.02.1990
(51) Int. Cl.: B23B 29/04

(54) **Innendrehmeissel**
Inside turning tool
Outil à tourner les intérieurs

(30) Priorität: 03.03.1989 DE 8902529 U
(43) Veröffentlichungstag der Anmeldung: 05.09.1990
(73) Patentinhaber: HARTMETALL-WERKZEUGFABRIK PAUL HORN GMBH, D-72072 Tübingen (DE)
(72) Erfinder: Seifermann, Norbert, D-7454 Bodelshausen (DE)
(74) Vertreter: Patentanwälte Bartels und Partner

(56) Entgegenhaltungen:
- CH-A- 0 260 653
- DE-A- 1 477 355
- DE-B- 2 848 227
- FR-A- 2 495 978
- US-A- 1 440 672
- US-A- 4 092 083

## Beschreibung

Die Erfindung betrifft einen Innendrehmeißel zum Bearbeiten der Innenfläche von Bohrungen, z.B. zum Stechdrehen von umlaufenden Nuten in die Bohrungswand, zum Feindrehen der Bohrungswand, zum Gewindedrehen in einer Bohrungswand und dergleichen.

Hierbei wird mit "Innendrehmeißel" das ganze in eine Werkzeugmaschine einspannbare Werkzeug verstanden, das einen Klemmhalter, ein Hakenwerkzeug, das einen Schaft hat, der an seinem hakenförmig abgebogenen Ende mit einer Schneide versehen ist, eine Aufnahmeaussparung im Klemmhalter, die für die Aufnahme des Schaftes des Hakenwerkzeuges vorgesehen ist, und ein Klemm-Mittel aufweist, mittels dessen der Schaft des Hakenwerkzeuges in der Aufnahmeaussparung des Klemmhalters festklemmbar ist. Als Klemm-Mittel ist es bekannt eine Klemmschraube vorzusehen.

Beim Bearbeiten der Innenwand einer Bohrung hat die Schneide des Werkzeuges beim Stechdrehen eine radiale Vorschubrichtung. Hierbei muß die Schneide möglichst genau in einer sich parallel zu dieser radialen Vorschubrichtung erstreckenden Vorschub-Diametralebene der zu bearbeitenden Bohrung liegen. Nur bei dieser Lage der Schneide ergibt sich ein optimaler Freiwinkel. Abstände der Schneide von der Vorschub-Diametralebene ergeben Freiwinkel, die sich beim Spanabheben nachteilig auswirken, z.B. zu Schwingungen des Werkzeuges führen können. Aus diesem Grunde muß beim Einwirken des Klemm-Mittels, z.B. Festziehen der Klemmschraube, eine sehr genaue Drehstellung des Werkzeuges im Klemmhalter erreicht werden, die sich auch bei Belastung des Werkzeuges nicht merkbar ändern darf. Besonders kritisch sind Abstände der Schneide von dieser Diametralebene bei zu bearbeitenden Bohrungen mit kleinem Durchmesser, da dort schon ein geringer, von Null verschiedener Abstand zu einer großen Änderung des Freiwinkels führt.

Bei einem gattungsgemäßen Innendrehmeißel nach der US-A-1 440 672 wird der Rundschaft des Hakenwerkzeuges mittels einer Klemmschraube zwischen den V-förmigen Spannflächen der Aufnahmeaussparung im Klemmhalter festgelegt, so daß durch die dadurch verursachte hohe Reibungskraft das Hakenwerkzeug im Halter festgelegt ist. Eine sehr genaue Drehstellung des Werkzeuges im Klemmhalter, die auch während der Bearbeitung ständig beibehalten wird, läßt sich hierdurch nicht erreichen, so daß es zu Abweichungen von dem optimalen Freiwinkel kommt, die die spanabhebende Bearbeitung, wie dargelegt, nachteilig beeinflussen, insbesondere wenn es sich um Bohrungen mit extrem kleinem Durchmesser handelt.

Es ist zwar schon vorgeschlagen worden, um eine genauere Drehstellung des Schaftes des Hakenwerkzeuges im Klemmhalter zu erreichen, den Rundschaft der bekannten Hakenwerkzeuge mit einer Abflachung zu versehen, auf das das Ende der Klemmschraube einwirkt. Jedoch muß zwischen dem Schaft des Hakenwerkzeuges und der Aufnahmeaussparung ein gewisses Spiel vorhanden sein, um überhaupt das Hakenwerkzeug in die Aufnahmeaussparung einsetzen zu können, mit der Folge, daß beim Festziehen der Klemmschraube nun die der Klemmschraube gegenüberliegenden Flächen des Schaftes an die Wandung der Aufnahmeaussparung derart gedrückt werden, daß die dadurch verursachte Reibungskraft, wenn die Abflachung nicht genau senkrecht zur Längsachse der Klemmschraube ausgerichtet ist, eine weitere Ausrichtung beim Festziehen der Klemmschraube verhindert. Es ergibt sich dann wiederum eine innerhalb des genannten Spieles liegende willkürliche Lage der Schneide relativ zur Vorschub-Diametralebene mit den bekannten nachteiligen Folgen bei der spanabhebenden Bearbeitung. Auch wird bei der Belastung des Hakenwerkzeuges während des Spanabhebens ein Drehmoment auf das Hakenwerkzeug ausgeübt, was zu einer leichten Verformung der Abflachung und der Klemmschraube und damit zu einer Änderung der Lage der Schneide senkrecht zu der Vorschub-Diametralebene führen kann.

Ausgehend von diesem Stand der Technik liegt der Erfindung die Aufgabe zugrunde, einen Innendrehmeißel zu schaffen, mittels dessen optimale Verhältnisse für das Spanabheben erzielbar sind, insbesondere um Bohrungen mit extrem kleinem Durchmesser bearbeiten zu können, und dabei eine genaue Drehstellung des Schaftes des Hakenwerkzeuges im Klemmhalter zu erreichen. Diese Aufgabe wird durch die Kombination der im geltenden Anspruch 1 genannten Merkmale gelöst.

Dadurch, daß gemäß dem kennzeichnenden Teil des Anspruches 1 das Einspannende des Schaftes des Hakenwerkzeuges für den Eingriff in die Erweiterung der Aufnahmeaussparung mit einem aus dem Umfang des Schaftes vorstehenden radialen Vorsprung versehen ist, der radial nach außen konvergierende Anlageflächen für die mindestens teilweise Anlage an den Spannflächen der Erweiterung aufweist und daß der Schaft auf der der Schneide abgekehrten Seite zur Hälfte kreiszylindrisch ist und auf der der Schneide zugekehrten Seite abgeflacht ist und der radiale Vorsprung an der abgeflachten Seite vorgesehen ist, wird überhaupt erst die Möglichkeit geschaffen, in der Bohrungswand von Bohrungen mit extrem kleinem Durchmesser eine Innennut drehen zu können und dabei der Schneide eine genau hierfür notwendige definierte Lage zu erteilen. Um eine Innennut drehen zu können, muß der Schaftdurchmesser kleiner sein als der Durchmesser der Bohrung, wobei ein so dünner Schaft sich nunmehr gemäß der Erfindung in einer genau definierten Lage festspannen läßt. Durch den kreiszylindrischen Teil des Schaftes wird der zur Verfügung stehende Raum für die Übertragung von Torsionskräften bei der Bearbeitung optimal ausgenutzt, was bei einem Schaft mit polygonalem Querschnitt nicht der Fall wäre.

Dadurch, daß erfindungsgemäß mittels Formschluß eine genau definierte Drehstellung des Hakenwerkzeuges dadurch erreicht wird, daß die radiale Erweiterung der Aufnahmeaussparung und der radiale Vorsprung am Schaft des Hakenwerkzeuges durch die Einwirkung des Klemm-Mittels zu einer definierten Anlage der Anlageflächen des radialen Vorsprunges an die Spannflächen der Erweiterung führen, wird gleichzeitig dadurch auch eine Änderung der Schneidenlage senkrecht zu der Vorschub-Diametralebene bei Belastung des Werkzeuges vermieden, da die Drehstellung des Werkzeuges in Bezug auf den Klemmhalter dadurch gesichert ist, daß die Anlagen der Anlageflächen an den Spannflächen an einem gegenüber dem Radius der Aufnahmebohrung vergrößerten Radius wirken.

Bei der erfindungsgemäßen Ausbildung des Innendrehmeißels kann als Klemm-Mittel sowohl die bekannte Klemmschraube als auch ein in die Aufnahmeaussparung längs oder quer zu dieser eingreifender Klemmkeil vorgesehen sein.

Um Bohrungen mit extrem kleinem Durchmesser bearbeiten zu können, ist es vorteilhaft, das Hakenwerkzeug einstückig auszubilden. Weitere Vorteile ergeben sich, wenn das Hakenwerkzeug aus Hartmetall besteht. Durch den großen E-Modul von Hartmetall bleibt die Schneide auch bei verhältnismäßig hohen Belastungen exakt in der ursprünglich eingestellten Stellung, so daß eine Änderung der Schneidenlage in Bezug auf die Vorschub-Diametralebene bei Belastung praktisch ausgeschlossen ist.

Bei einer weiteren vorteilhaften Ausbildung des erfindungsgemäßen Innendrehmeißels ist vorgesehen, daß der Klemmhalter mit einer Kühlmittelbohrung und der radiale Vorsprung des Hakenwerkzeuges mit einer in axialer Richtung durchgehenden Aussparung versehen sind und daß die Kühlmittelbohrung und die Aussparung bei im Klemmhalter festgespanntem Hakenwerkwerkzeug miteinander verbunden sind. Die erfinderische Ausbildung des Hakenwerkzeuges des Innendrehmeißels gemäß der Erfindung mit einem radialen Vorsprung am Schaft ergibt nämlich die Möglichkeit, eine Kühlmittelbohrung oder eine Kühlmittelnut im bzw. am radialen Vorsprung vorzusehen, durch die die Festigkeit des Schaftes des Hakenwerkzeuges nicht beeinträchtigt wird.

Die Erfindung und ihre weiteren vorteilhaften Ausgestaltungen sind in der folgenden Beschreibung eines Ausführungsbeispieles im einzelnen erläutert.

Es zeigen:
- Fig. 1: eine schaubildliche Darstellung des auseinandergenommenen Innendrehmeißels;
- Fig. 2: einen Schnitt nach der Linie II - II in Fig. 1;
- Fig. 3: eine Vorderansicht des Klemmhalters;
- Fig. 4: eine Seitenansicht des Hakenwerkzeuges und
- Fig. 5: einen Schnitt nach der Linie V - V in Fig .4.

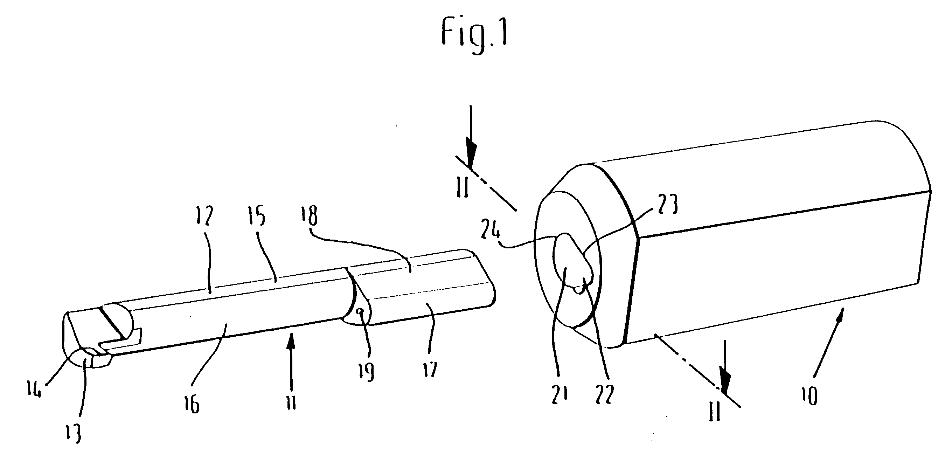

Das in Fig.1 dargestellte Ausführungsbeispiel eines Innendrehmeißels gemäß der Erfindung weist einen Klemmhalter 10 für ein Hakenwerkzeug 11 auf. Das Hakenwerkzeug 11 ist mit einem Schaft 12 versehen, der ein hakenförmig abgebogenes Ende 13 für eine Schneide 14 aufweist. Auf der der Schneide 14 abgekehrten Seite 15 ist der Schaft 12 zur Hälfte kreiszylindrisch. Die der Schneide 14 zugekehrte Seite 16 des Schaftes ist abgeflacht. Von dieser abgeflachten Seite ist der Schaft 12 an seinem der Schneide 14 abgekehrten Ende mit einem im folgenden Bart 17 genannten radialen Vorsprung versehen. Der Bart 17 weist von der Schaftlängsachse nach außen konvergierende ebene Anlageflächen 18 auf. In einem geringen Abstand von der abgeflachten Seite 16 des Schaftes befindet sich im Bart eine in der Längsrichtung des Schaftes 12 durchgehende Bohrung 19 für ein Kühlmittel.

Der Klemmhalter 10 weist für das Hakenwerkzeug 11 eine Aufnahmeaussparung 21 auf, in die das mit dem Bart 17 versehene Ende des Hakenwerkzeuges 12 mit Spiel eingesetzt werden kann. Diese Aufnahmeaussparung 21 weist an einer Seite eine radiale Erweiterung 22 auf, deren einander zugekehrten Wände ebene Spannflächen 23 bilden, die ebenso wie die Anlageflächen 18 des Bartes 17 radial nach außen konvergieren und dabei miteinander einen Winkel einschließen, der gleich dem Winkel ist, den die Anlageflächen 18 des Bartes 17 miteinander bilden. Die beiden Spannflächen 23 liegen in gedachten Ebenen, die sich in einer gedachten Schnittlinie schneiden, die zur Längsachse des Klemmhalters 10 parallel verläuft. Der dieser gedachten Schnittlinie der Spannflächen gegenüberliegende Wandungsteil 24 der Aufnahmeaussparung ist kreiszylindrisch und erstreckt sich über etwas mehr als 180°, so daß die Spannflächen den kreiszylindrischen Wandungsteil tangieren. Auf einer Seite der Aufnahmeaussparung 21 ist neben der einen Spannfläche 23 eine Bohrung 25 vorgesehen, die diese Spannfläche 23 schneidet und dadurch die Spannfläche durch einen Spalt 26 unterbricht.

Auf der der gedachten Schnittlinie der Spannflächen diametral gegenüberliegenden Seite der Aufnahmeaussparung 21 ist im Klemmhalter 10 eine radiale Gewindebohrung 28 für eine Klemmschraube 27 vorgesehen.

Für das Zuführen eines Kühlmittels ist im Klemmhalter 10 eine sich in seiner Längsrichtung erstreckende, von der Aufnahmeaussparung 21 bis zum anderen Ende des Klemmhalters erstreckende Bohrung 29 vorgesehen. Senkrecht zur Längsachse dieser Bohrung 29 ist eine ebenfalls in die Aufnahmeaussparung unmittelbar neben dem Boden derselben mündende weitere Bohrung 31 für einen in der Zeichnung nicht dargestellten Stift vorgesehen, der als Anschlag für das Hakenwerkzeug 11 dient.

Die Bohrung 25 und damit der Schlitz 26 enden in einem kleinen axialen Abstand von der Bohrung 31.

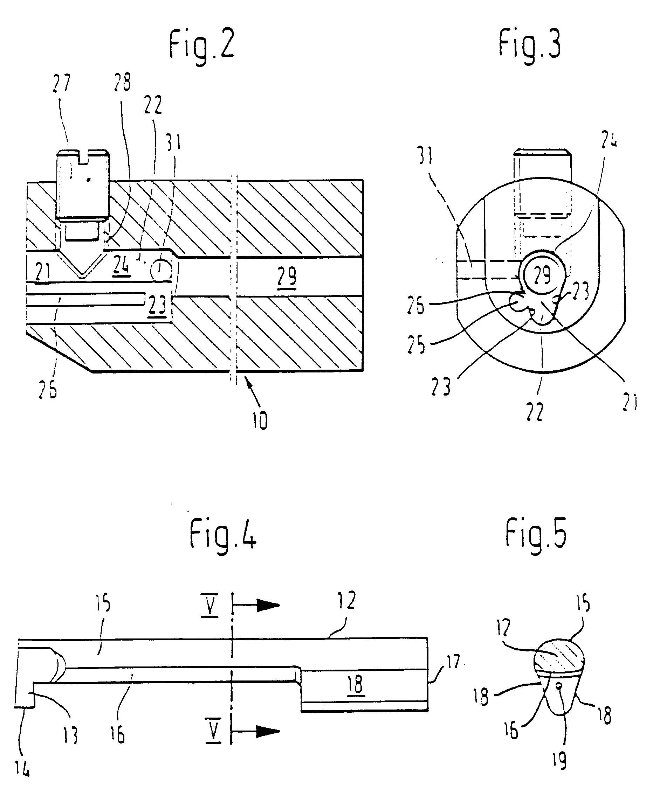

Für den Einsatz des Innendrehmeißels wird das Hakenwerkzeug 11 mit seinem in den Fig.1 und 4 rechts dargestellten Ende in die Aufnahmeaussparung 21 des Klemmhelters 10 eingeführt, bis es an den in die Bohrung 31 eingeführten Stift anstößt. Dann wird die Klemmschraube 27 eingedreht, so daß sie mit ihrem inneren Ende das Hakenwerkzeug in Fig.2 nach unten drückt, wobei die Anlageflächen 18 des Hakenwerkzeuges 11 an die Spannflächen 23 der Aufnahmeaussparung 21 gedrückt werden. Dadurch erhält das Hakenwerkzeug 11 relativ zum Klemmhalter 10 eine genau definierte spielfreie Lage, die sich auch bei Belastung nicht ändern kann.

Um eine Änderung der Lage der Schneide 14 des Hakenwerkzeuges bei Belastung zu vermeiden, besteht das Hakenwerkzeug aus gesintertem Hartmetall.

Diese genaue Festlegung der Drehstellung des Hakenwerkzeuges 11 gegenüber dem Klemmhalter 10 und die auch bei Belastung unveränderliche Winkellage der Schneide 14 gegenüber dem Klemmhalter 10 ermöglichen es, mit dem so ausgebildeten Innendrehmeißel Bohrungen mit extrem kleinem Durchmesser exakt zu bearbeiten.

Durch den durch die Bohrung 25 erzeugten Schlitz 26 in der einen Spannfläche 23 wird für die Anlageflächen 18 des Bartes 17 des Hakenwerkzeuges 11 eine Dreiflächenauflage erreicht, durch die eine besonders genaue Winkelstellung des Hakenwerkzeuges 11 relativ zum Klemmhalter 10 erreichbar ist.

Bei einem nicht dargestellten Ausführungsbeispiel kann mindestens die der unterbrochenen Spannfläche gegenüberliegende Spannfläche 23 als über die entsprechende Wandung der Erweiterung 22 leicht vorstehende Plattform ausgebildet sein, was zur Genauigkeit auch bei Abnutzung dieser Fläche beiträgt.

Während des Bearbeitens der Innenwandung einer Bohrung mittels des dargestellten Innendrehmeißels wird ein Kühlmittel durch die Bohrung 29 in den durch den Anschlagstift 31 verursachten Zwischenraum eingeführt, von wo es dann durch die Bohrung 19 im Bart des Hakenwerkzeuges 11 zur Schneide 14 gelangt. Durch die Begrenzung der Bohrung 25 und damit des Schlitzes 26 wird erreicht, daß dieser vom Bart 17 verschlossen wird, so daß das Kühlmittel im wesentlichen nur durch die Bohrung 19 fließt. Anstelle der Bohrung 19 kann der Bart 17 auch mit einer axial durchgehenden, in der Zeichnung nicht dargestellten Nut versehen sein.

Eine andere in der Zeichnung nicht dargestellte Möglichkeit für eine genaue Winkelstellung des Hakenwerkzeuges relativ zum Klemmhalter kann dadurch erreicht werden, daß zur Bildung einer Dreilinienanlage der Anlageflächen 18 des radialen Vorsprunges an den Spannflächen 23 der Erweiterung 22 die eine der Anlage- oder Spannflächen konkav und die andere konvex ausgebildet ist und die mit diesen zusammenwirkenden Spann- bzw. Anlageflächen im wesentlichen eben sind.

Beim dargestellten Ausführungsbeispiel ist das Hakenwerkzeug 11 mit dem hakenförmig abgebogenen Ende 13 und dem Bart 17 einstückig ausgebildet. Die Schneide 14 kann aber auch an einer Schneidplatte vorgesehen sein, die an dem hakenförmigen Ende 13 angelötet ist.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegentandes der Erfindung.

## Patentansprüche

1. Innendrehmeißel mit
- einem Klemmhalter (10),
- einem Hakenwerkzeug (11), das einen Schaft (12) hat, der an seinem hakenförmig abgebogenen Arbeitsende (13) mit einer Schneide (14) versehen ist,
- einer Aufnahmeaussparung (21) im Klemmhalter (10), die für die Aufnahme des Einspannendes des Schaftes (12) des Hakenwerkzeuges (11) vorgesehen ist und an einer Seite eine radiale Erweiterung (22) mit einander zugekehrten Wänden aufweist, die Spannflächen (23) bilden, die von der Längsachse der Aufnahmeaussparung (21) radial nach außen konvergieren, und
- einem Klemm-Mittel, das im wesentlichen diametral gegenüber der Erweiterung (22) der Aufnahmeaussparung (21) angeordnet ist und mittels dessen das Einspannende des Schaftes (12) in der Aufnahmeaussparung (21) des Klemmhalters (10) festklemmbar ist,
dadurch gekennzeichnet,
- daß das Einspannende des Schaftes (12) des Hakenwerkzeuges (11) für den Eingriff in die Erweiterung (22) der Aufnahmeaussparung (21) mit einem aus dem Umfang des Schaftes vorstehenden radialen Vorsprung (17) versehen ist, der radial nach außen konvergierende Anlageflächen (18) für die mindestens teilweise Anlage an den Spannflächen (23) der Erweiterung (22) aufweist und
- daß der Schaft (12) auf der der Schneide (14) abgekehrten Seite (15) zur Hälfte kreiszylindrisch ist und auf der der Schneide zugekehrten Seite (16) abgeflacht ist und der radiale Vorsprung (17) an der abgeflachten Seite (16) vorgesehen ist.

2. Innendrehmeißel nach Anspruch 1, dadurch gekennzeichnet, daß sich die Spannflächen (23) der Erweiterung an die Aufnahmeaussparung (21) im Klemmhalter (10), diese Aufnahmeaussparung tangierend, anschließen.

3. Innendrehmeißel nach Anspruch 1 oder 2, dadurch gekennzeichnet, daß die radial nach außen konvergierenden Spannflächen (23) der Aufnahmeaussparung (21) im Klemmhalter (10) im wesentlichen mit gedachten ebenen Flächen zusammenfallen, die sich in einer zur Längsachse der Aufnahmeaussparung (21) parallelen Geraden schneiden.

4. Innendrehmeißel nach einem der Ansprüche 1 bis 3, dadurch gekennzeichnet, daß die eine Spannfläche (23) der Erweiterung (22) zur Bildung einer Dreiflächenauflage für die Anlageflächen (18) des Hakenwerkzeuges (11) durch einen Spalt (26) unterbrochen ist, der sich in Richtung der Längsachse der Aufnahmeaussparung (21) erstreckt.

5. Innendrehmeißel nach Anspruch 1 oder 2, dadurch gekennzeichnet, daß zur Bildung einer Dreilinienanlage der Anlageflächen des radialen Vorsprunges an den Spannflächen der Erweiterung die eine der Anlage- oder Spannflächen konkav und die andere konvex und die mit diesen zusammenwirkenden Spann- bzw. Anlageflächen eben ausgebildet sind.

6. Innendrehmeißel nach einem der Ansprüche 1 bis 5, dadurch gekennzeichnet, daß die Aufnahmeaussparung (21) im Klemmhalter (10) einen kreiszylindrischen Wandungsteil hat, an den sich die Spannflächen der Erweiterung (22) anschließen.

7. Innendrehmeißel nach einem der Ansprüche 1 bis 6, dadurch gekennzeichnet, daß das Hakenwerkzeug (11) einstückig ist.

8. Innendrehmeißel nach einem der Ansprüche 1 bis 7, dadurch gekennzeichnet, daß das Hakenwerkzeug (11) aus Hartmetall besteht.

9. Innendrehmeißel nach einem der Ansprüche 1 bis 8, dadurch gekennzeichnet, daß der Klemmhalter (10) mit einer Kühlmittelbohrung (29) und der radiale Vorsprung (17) des Hakenwerkzeuges (11) mit einer in axialer Richtung durchgehender Aussparung (19) versehen sind und daß die Kühlmittelbohrung (29) und die Aussparung (19) bei im Klemmhalter (10) festgespanntem Hakenwerkzeug (11) miteinander verbunden sind.

10. Innendremeißel nach einem der Ansprüche 1 bis 9, dadurch gekennzeichnet, daß als Klemm-Mittel eine Klemmschraube (27) oder ein Klemmkeil vorgesehen ist.

## Claims

1. Internal turning tool with
- a clamping holder (10),
- a hook tool (11), which has a shaft (12), which is provided with a cutting edge (14) on its working end (13) bent in the shape of a hook,
- a receiving recess (21) in the clamping holder (10), which is provided for receiving the chucked end of the shaft (12) of the hook tool (11) and on one side comprises a radial enlargement (22) with walls facing each other, which form the clamping surfaces (23), which converge radially outwards from the longitudinal axis of the receiving recess (21), and
- clamping means, which are located substantially diametrically opposite the enlargement (22) of the receiving recess (21) and by means of which the chucked end of the shaft (12) can be securely clamped in the receiving recess (21) of the clamping holder (10),
characterised in that
- the chucked end of the shaft (12) of the hook tool (11) is provided for engagement in the enlargement (22) of the receiving recess (21) with a radial projection (17) projecting from the periphery of the shaft, which projection (17) comprises radially outwardly converging abutment surfaces (18) for the at least partial abutment against the clamping surfaces (23) of the enlargement (22) and that
- the shaft (12) is semi-cylindrical to the half way point on the side (15) remote from the cutting edge (14) and is flattened on the side (16) facing the cutting edge and the radial projection (17) is provided on the flattened side (16).

2. Internal turning tool according to Claim 1, characterised in that the clamping surfaces (23) of the enlargement adjoin the receiving recess (21) in the clamping holder (10), tangent to this receiving recess.

3. Internal turning tool according to Claim 1 or 2, characterised in that the radially outwardly converging clamping surfaces (23) of the receiving recess (21) in the clamping holder (10) coincide essentially with imaginary flat surfaces, which intersect in a straight line parallel to the longitudinal axis of the receiving recess (21).

4. Internal turning tool according to one of Claims 1 to 3, characterised in that the one clamping surface (23) of the enlargement (22), for forming a three-surface support for the abutment surfaces (18) of the hook tool (11), is interrupted by a gap (26), which extends in the direction of the longitudinal axis of the receiving recess (21).

5. Internal turning tool according to Claim 1 or 2, characterised in that to form a three-line abutment of the abutment surfaces of the radial projection on the clamping surfaces of the enlargement, the one abutment or clamping surface has a concave construction and the other a convex construction and the clamping or abutment surfaces cooperating therewith have a flat construction.

6. Internal turning tool according to one of Claims 1 to 5, characterised in that the receiving recess (21) in the clamping holder (10) has a circular cylindrical wall part, which the clamping surfaces of the enlargement (22) adjoin.

7. Internal turning tool according to one of Claims 1 to 6, characterised in that the hook tool (11) is in one piece.

8. Internal turning tool according to one of Claims 1 to 7, characterised in that the hook tool (11) consists of hard metal.

9. Internal turning tool according to one of Claims 1 to 8, characterised in that the clamping holder (10) is provided with a coolant bore (29) and the radial projection (17) of the hook tool (11) is provided with a continuous recess (19) in the axial direction and that the coolant bore (29) and the recess (19) are connected to each other when the hook tool is securely clamped in the clamping holder (10).

10. Internal turning tool according to one of Claims 1 to 9, characterised in that a clamping screw (27) or a clamping wedge is provided as the clamping means.

## Revendications

1. Outil à tourner les intérieurs qui comprend :
un support à serrage (10);
un outil crochu (11) dont la tige présente à son extrémité active, pliée en crochet (13), un tranchant (14);
dans le support (10), un évidemment de réception (21) pour recevoir l'extrémité de montage ou de fixation de la tige (12) de l'outil crochu (11) et, d'un côté, une partie élargie (22) présentant des parois en regard qui forment les surfaces de serrage (23) qui, à partir de l'axe longitudinal de l'évidement de réception (21), convergent radialement vers l'extérieur; et
un moyen de serrage placé en un point pratiquement diamétralement opposé à l'élargissement (22) de l'évidement de réception (21) et grâce auquel l'extrémité de la tige (12) peut être fermement serrée dans l'évidement de réception (21) du support (10),
caractérisé en ce que l'extrémité destinée à être serrée de la tige (12) de l'outil crochu (11) et destinée à s'engager dans l'élargissement (22) de l'évidement de réception (21) est pourvue d'un élément radial (17) faisant saillie du pourtour de la tige, qui présente des surfaces de montage (18) qui convergent radialement vers l'extérieur aux fins d'application, au moins partielle, contre les surfaces de serrage (23) de l'élargissement (22) et en ce que la tige (12) présente, à moitié, du côté (15) opposé au tranchant (14), une forme cylindrique circulaire, tandis que le côté (16) en regard du tranchant (14) est aplati, ledit côté aplati (16) présentant l'élément radial saillant (17).

2. Outil selon la revendication 1, caractérisé en ce que les surfaces de serrage (23) de l'élargissement se raccordent tangentiellement à l'évidement de réception (21) du support (10).

3. Outil selon la revendication 1 ou 2, caractérisé en ce que les surfaces de serrage (23) qui convergent radialement vers l'extérieur, de l'évidement de réception (21) coïncident dans le support (10) avec des surfaces imaginaires qui se coupent suivant une droite parallèle à l'axe longitudinal de l'évidement (21).

4. Outil selon l'une quelconque des revendications 1 à 9, caractérisé en ce que la surface de serrage (23) de l'élargissement (22) est interrompue, pour former un triple appui pour les surfaces 18 de l'outil crochu (11), par une fente (26) qui s'étend dans la direction de l'axe longitudinal de l'évidement de réception (21).

5. Outil selon la revendication 1 ou 2, caractérisé en ce que, pour produire un contact trilinéaire des surfaces de support de l'élément saillant radial sur les surfaces de serrage de l'élargissement, l'une des surfaces de support ou de serrage est concave, tandis que l'autre est convexe, tandis que les surfaces de support ou de serrage coopérant avec lesdites surfaces sont planes.

6. Outil selon l'une quelconque des revendications 1 à 5, caractérisé en ce que l'ouverture de réception (21) du support de serrage (10) comporte un élément de paroi cylindrique auquel se raccordent les surfaces de serrage de l'élargissement (22).

7. Outil selon l'une quelconque des revendications 1 à 5, caractérisé en ce que l'outil crochu (11) est d'une pièce.

8. Outil selon l'une quelconque des revendications 1 à 7, caractérisé en ce que l'outil crochu (11) est en un métal dur.

9. Outil selon l'une quelconque des revendications 1 à 8, caractérisé en ce que le support de serrage (10) présente un perçage de refroidissement (29), tandis que la saillie radiale (17) de l'outil crochu (11) est pourvu d'un évidement (19) traversant dans le sens axial, cependant que ledit perçage de refroidissement (29) et l'évidement (19) sont reliés ensemble lorsque l'outil crochu (11) est serré dans le support (10).

10. Outil selon l'une quelconque des revendications 1 à 9, caractérisé en ce que l'on prévoit comme moyen de serrage une vis (27) ou un élément en forme de coin.
